# EUROPEAN PATENT SPECIFICATION

(11) **EP 2 709 241 B1**
(45) Date of publication and mention of the grant of the patent: **29.07.2020**
(21) Application number: 13184171.0
(22) Date of filing: 12.09.2013
(51) Int. Cl.: H02K 1/27, H02K 1/30, B62D 7/14

(54) **Rear wheel steering apparatus for vehicle including rotor**
Hinterradlenksystemvorrichtung für ein Fahrzeug mit einem Rotor
Appareil de commande de roue arrière pour véhicule incluant un rotor

(30) Priority: 13.09.2012 JP 2012201440; 29.05.2013 JP 2013112520
(43) Date of publication of application: 19.03.2014
(73) Proprietor: AISIN SEIKI KABUSHIKI KAISHA, Kariya-shi, Aichi-ken, 448-8650 (JP)
(72) Inventor: Kato, Hideaki, Kariya-shi, Aichi-ken, 448-8650 (JP); Kono, Soichiro, Kariya-shi, Aichi-ken, 448-8650 (JP); Asaga, Takashi, Kariya-shi, Aichi-ken, 448-8650 (JP)
(74) Representative: Winter, Brandl, Fürniss, Hübner, Röss, Kaiser, Polte - Partnerschaft mbB

(56) References cited:
- EP-A1- 0 667 279
- WO-A2-2011/085891
- DE-B3-102007 006 986
- US-A1- 2006 022 541
- US-A1- 2008 042 503
- US-A1- 2011 031 843

## Description

### TECHNICAL FIELD

This disclosure generally relates to a rear wheel steering apparatus for a vehicle including a rotor.

### BACKGROUND DISCUSSION

JP2009-113730A, which will be hereinafter referred to as Reference 1, discloses a rear wheel steering apparatus configured to steer rear wheels by an axial driving force converted, via a screw mechanism, from a rotation driving force generated by rotation driving means corresponding to an electric motor, for example. The rear wheel steering apparatus includes a brushless motor serving as the electric motor used as the rotation driving means, and a planetary gear train serving as a gear mechanism decreasing an output of the brushless motor. A hollow rotation shaft is used as an output shaft of the brushless motor.

JP2007-14178A, which will be hereinafter referred to as Reference 2, discloses a rotor of a brushless motor intended to improve responsiveness of the brushless motor regardless of a position of a polarity of a magnet. The rotor includes a rotation shaft, a rotor back yoke fixed to the rotation shaft to integrally rotate therewith, and a permanent magnet fixed and attached to an outer peripheral surface of the rotor back yoke. The rotor back yoke includes a lightening portion at a portion except for an outer peripheral portion that makes contact with the permanent magnet. Then, dimensions of a magnetic path width at the outer peripheral portion are specified to inhibit an occurrence of magnetic flux saturation. According to the rotor disclosed in Reference 2, the rotor back yoke is press-fitted and fixed to the rotation shaft so as to rotate integrally with the rotation shaft. At this time, a press-fitting load between the rotation shaft and the rotor back yoke is reduced by plural cutting portions formed at an inner peripheral surface of the rotor back yoke.

In addition, various types of rear wheel steering apparatuses each constituting a portion of a four-wheel steering system (4WS) for a vehicle are known. Such rear wheel steering apparatus, for example, as disclosed in JP5098242B, which will be hereinafter referred to as Reference 3, basically includes a rod connected to a rear wheel of a vehicle, a housing supporting the rod and fixed to a chassis of the vehicle, and a motor accommodated within the housing and driving the rod to steer rear wheels. Further, various types of suspension mechanisms are provided for supporting the rear wheels of a vehicle, and various types of rear wheel steering apparatuses each of which is mounted to the suspension mechanism are also provided. For example, a rear wheel steering apparatus disclosed in JP2012-511465A, which will be hereinafter referred to as Reference 4, includes a basic configuration different from that of the steering apparatus disclosed in Reference 3. The rear wheel steering apparatus disclosed in Reference 4 also includes a blocking device for allowing and prohibiting a transmission of a driving force from an electric motor to a push rod. The blocking device is supported, by a module housing, together with the electric motor and a transmission that converts a rotary motion of the electric motor to a translational motion of the push rod.

According to the rotor of motor the disclosed in Reference 2, the rotation shaft is solid. On the other hand, according to the rear wheel steering apparatus disclosed in each of References 1, 3, and 4, the hollow rotation shaft is used as the output shaft of the brushless motor. In a case where the hollow rotation shaft disclosed in each of References 1, 3, and 4 is used as the rotation shaft of the motor disclosed in Reference 2, an outer diameter of the rotation shaft in Reference 2 is necessarily enlarged. Thus, a radial length of the rotor back yoke may not be sufficiently secured. It may be difficult to provide the plural cutting portions, which may lead to difficulty in ensuring a space portion for inhibiting the saturation of magnetic flux. In addition, depending on a shape of a contact surface between the rotation shaft and each of the cutting portions, an outer peripheral surface of the rotation shaft may be damaged when the rotor back yoke is press-fitted to the rotation shaft.

According to the rear wheel steering apparatus disclosed in each of References 3 and 4, configurations of the rotor are not specified. A connection structure between the back yoke and the hollow rotation shaft is uncertain and configurations of the rotor that may contribute to an increase of assembly performance and a reduced cost as the entire rear wheel steering apparatus is not disclosed.

Further prior art is disclosed in the documents US 2006/022541 A1 and EP 0 667 279 A1.

A need thus exists for a rear wheel steering apparatus including a rotor of an electric motor, including a hollow rotation shaft, a back yoke, and plural permanent magnets. In the rear wheel steering apparatus, the back yoke is easily press-fitted to the hollow rotation shaft and is held in a stable state, and a flux leakage is restrained to securely form a magnetic path passing through the hollow rotation shaft.

### SUMMARY

The present invention is a rear wheel steering apparatus for a vehicle as defined in the independent claim 1. Further embodiments of the invention are defined in the dependent claims 2 - 4. According to the present invention, a rear wheel steering apparatus for a vehicle is mounted to a suspension mechanism to steer rear wheels, the rear wheel steering apparatus includes a housing connected via a first connection member and a second connection member to the suspension mechanism that supports the rear wheels of a vehicle, an electric motor accommodated within a cylindrical body that constitute a portion of the housing, a deceleration mechanism accommodated within the cylindrical body to decrease an output of the electric motor, a linear motion mechanism including a nut member connected to the deceleration mechanism to rotate and a rod meshed with the deceleration mechanism and connected to the second connection member, the linear motion mechanism converting a rotary motion of the nut member to a linear motion of the rod, a connection cover including the first connection member and closing an opening portion of the cylindrical body at a side facing the deceleration mechanism, and a rotor constituting a portion of the electric motor and including a hollow rotation shaft supported by the cylindrical body to be rotatable relative to the cylindrical body, a back yoke fitted to an outer peripheral surface of the hollow rotation shaft and integrally rotating with the hollow rotation shaft, the back yoke including a cylindrical form, and plural permanent magnets arranged at the back yoke at even intervals in a circumferential direction of the back yoke. The back yoke includes plural projecting portions each of which includes an inner peripheral surface formed in an arc shape in a cross section, the inner peripheral surface projecting towards an axial center of the hollow rotation shaft and extending in an axial direction of the hollow rotation shaft. An inner radius of the inner peripheral surface formed in the arc shape in the cross section is specified to be greater than an outer radius of the outer peripheral surface of the hollow rotation shaft and a distance between a circumferential center of the inner peripheral surface formed in the arc shape in the cross section and the axial center of the hollow rotation shaft is specified to be equal to the outer radius of the outer peripheral surface of the hollow rotation shaft. The back yoke is press-fitted to the outer peripheral surface of the hollow rotation shaft via the plural projecting portions

Accordingly, the back yoke is easily press-fitted to the hollow rotation shaft and is securely assembled on the hollow rotation shaft without a damage thereof. A cost reduction as an entire rear wheel steering apparatus may be achieved. The rear wheel steering apparatus including the rotor may be easily assembled and obtained at a reduced cost.

The rear wheel steering apparatus further includes grooves at respective circumferential sides of each of the plural projecting portions, the grooves being parallel to the each of the plural projecting portions.

Accordingly, in a case where a large load is applied to the respective circumferential end portions of each of the plural projecting portions when the circumferential center portion of the inner peripheral surface of each of the plural projecting portions is press-fitted to the outer peripheral surface of the hollow rotation shaft, such load is released and escaped in directions where the grooves are formed.

According to the rear wheel steering apparatus, the plural projecting portions include three projecting portions arranged at even intervals in a circumferential direction of the back yoke.

Accordingly, the minimum number of projecting portions may appropriately hold the hollow rotation shaft.

According to the rear wheel steering apparatus, the back yoke is formed by a lamination of plural steel plates. One of the plural steel plates arranged at an uppermost portion in the lamination includes plural identification bores formed to be recessed at even intervals in the circumferential direction of the back yoke.

Accordingly, determination of upper and lower surfaces of the back yoke is available. Not only an improved assembly performance is obtained but also positioning at a time of magnetization is easily and securely performed. Further, without an increase of the number of processes, the plural identification bores are formed as a part of press working relative to the steel plates.

According to the invention, the rotor of the electric motor of the rear wheel steering apparatus of a vehicle includes a hollow rotation shaft supported by a housing to be rotatable relative to the housing, a back yoke fitted to an outer peripheral surface of the hollow rotation shaft and integrally rotating with the hollow rotation shaft, the back yoke including a cylindrical form, plural permanent magnets arranged at the back yoke at even intervals in a circumferential direction of the back yoke, and plural projecting portions formed at one of the back yoke and the hollow rotation shaft, each of the plural projecting portions via which a magnetic path is formed from the back yoke to the hollow rotation shaft.

Accordingly, a contact area between the back yoke and the hollow rotation shaft may be reduced as compared to a known rotor of a rear wheel steering apparatus. In addition, a flux leakage is restrained to securely form the magnetic path passing through the hollow rotation shaft.

The plural projecting portions are formed at the back yoke, each of the plural projecting portions projecting towards an axial center of the hollow rotation shaft from an inner peripheral surface of the back yoke positioned at a circumferential center portion of each of the plural permanent magnets and extending in an axial direction of the hollow rotation shaft. The back yoke is press-fitted to the outer peripheral surface of the hollow rotation shaft via the plural projecting portions.

When the back yoke is press-fitted to the hollow rotation shaft, inner peripheral surfaces of the plural projecting portions make contact with the outer peripheral surface of the hollow rotation shaft. Thus, a contact area between the back yoke and the hollow rotation shaft may be reduced as compared to a known rotor. A deformation of the hollow rotation shaft or the back yoke caused by a press-fitting load may be inhibited accordingly. In addition, because the plural projecting portions extend in the axial direction, the press-fitting of the back yoke to the hollow rotation shaft is easily performed and the back yoke may be retained in a stable state. Further, because each of the plural projecting portions projects towards the axial center of the hollow rotation shaft from the inner peripheral surface of the back yoke positioned at the circumferential center portion of each of the plural permanent magnets, a flux leakage is restrained to securely form the magnetic path passing through the hollow rotation shaft.

The plural projecting portions are formed at the hollow rotation shaft, each of the plural projecting portions projecting from an axial center of the hollow rotation shaft towards an inner peripheral surface of the back yoke positioned at a circumferential center portion of each of the plural permanent magnets and extending in an axial direction of the hollow rotation shaft. The hollow rotation shaft is press-fitted to the inner peripheral surface of the back yoke via the plural projecting portions.

When the hollow rotation shaft is press-fitted to the back yoke, outer peripheral surfaces of the plural projecting portions make contact with the inner peripheral surface of the back yoke. Thus, a contact area between the back yoke and the hollow rotation shaft may be reduced as compared to a known rotor. A deformation of the hollow rotation shaft or the back yoke caused by a press-fitting load may be inhibited accordingly. In addition, because the plural projecting portions extend in the axial direction, the press-fitting of the hollow rotation shaft to the back yoke is easily performed and the back yoke may be retained in a stable state. Further, because each of the plural projecting portions projects from the axial center of the hollow rotation shaft towards the inner peripheral surface of the back yoke positioned at the circumferential center portion of each of the plural permanent magnets, a flux leakage is restrained to securely form the magnetic path passing through the hollow rotation shaft.

The plural permanent magnets are accommodated within the back yoke.

Accordingly, a flux leakage is restrained to securely form the magnetic path passing through the hollow rotation shaft.

The plural permanent magnets are fixed to an outer peripheral surface of the back yoke.

Accordingly, a flux leakage is restrained to securely form the magnetic path passing through the hollow rotation shaft.

Each of the plural projecting portions includes an inner peripheral surface formed in an arc shape in a cross section, the inner peripheral surface projecting towards an axial center of the hollow rotation shaft and extending in an axial direction of the hollow rotation shaft. An inner radius of the inner peripheral surface formed in the arc shape in the cross section is specified to be greater than an outer radius of the outer peripheral surface of the hollow rotation shaft and a distance between a circumferential center of the inner peripheral surface formed in the arc shape in the cross section and the axial center of the hollow rotation shaft is specified to be equal to the outer radius of the outer peripheral surface of the hollow rotation shaft. The back yoke is press-fitted to the outer peripheral surface of the hollow rotation shaft via the plural projecting portions.

Accordingly, the back yoke may be easily press-fitted to the hollow rotation shaft and be securely assembled on the hollow rotation shaft without a breakage of the hollow rotation shaft. The back yoke may be held in a stable state. As a result, a cost reduction of the electric motor is achievable.

The rotor of the electric motor further includes grooves formed at respective circumferential sides of each of the plural projecting portions, the grooves being parallel to the each of the plural projecting portions.

Accordingly, in a case where a large load is applied to respective circumferential end portions of each of the plural projecting portions when a circumferential center portion of the inner peripheral surface of each of the plural projecting portions is press-fitted to the outer peripheral surface of the hollow rotation shaft, such load is released and escaped in directions where the grooves are formed.

The plural projecting portions include three projecting portions arranged at even intervals in the circumferential direction of the back yoke.

Accordingly, the minimum number of projecting portions may appropriately hold the hollow rotation shaft.

The back yoke is formed by a lamination of plural steel plates. One of the plural steel plates arranged at an uppermost portion in the lamination includes plural identification bores formed to be recessed at even intervals in the circumferential direction of the back yoke.

Accordingly, determination of upper and lower surfaces of the back yoke is available. Not only an improved assembly performance is obtained but also positioning at a time of magnetization is easily and securely performed. Further, without an increase of the number of processes, the plural identification bores are formed as a part of press working relative to the steel plates.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is an enlarged cross-sectional view of a portion of an electric motor of a rear wheel steering apparatus according to a first example disclosed here;
Fig. 2 is a plan view of a portion of the electric motor according to the first example;
Fig. 3 is a longitudinal section view illustrating a portion accommodating permanent magnets of a back yoke of a rotor of the electric motor according to the first example;
Fig. 4 is a longitudinal section view illustrating a joint structure of the back yoke of the rotor according to the first example;
Fig. 5 is a cross-sectional view of a main configuration of a rear wheel steering apparatus including the electric motor according to the first example;
Fig. 6 is an enlarged cross-sectional view of a portion of the electric motor according to a modified example of the first example;
Fig. 7 is an enlarged cross-sectional view of a portion of a rotor of an electric motor of a rear wheel steering apparatus according to a second embodiment disclosed here;
Fig. 8 is a plan view of a portion of the electric motor according to the second embodiment;
Fig. 9 is a cross-sectional view taken along a line IX-IX in Fig. 8 and illustrating a portion accommodating permanent magnets of a back yoke of the rotor according to the second embodiment;
Fig. 10 is a cross-sectional view taken along a line X-X in Fig. 8 and illustrating a joint structure of the back yoke of the rotor according to the second embodiment;
Fig. 11 is a cross-sectional view of a main configuration of a rear wheel steering apparatus including the electric motor according to the second embodiment;
Fig. 12 is an enlarged cross-sectional view of an actuator portion according to the second embodiment; and
Fig. 13 is an enlarged cross-sectional view of a controller portion according to the second embodiment.

### DETAILED DESCRIPTION

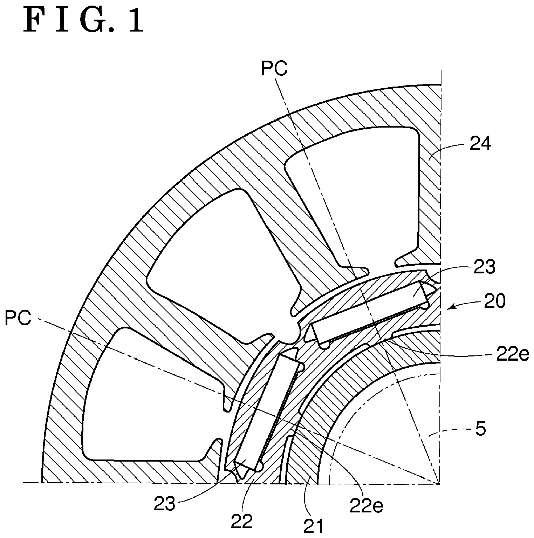

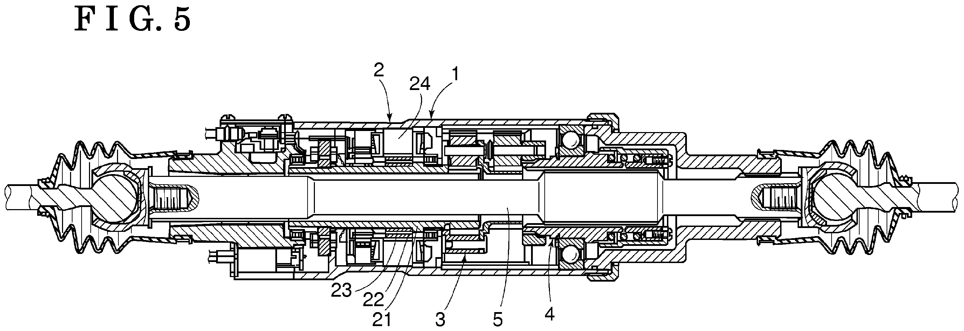

A first example being not subject of the present claim 1 will be explained with reference to Figs. 1 to 5. Fig. 5 illustrates an entire configuration of a rear wheel steering apparatus including an electric motor according to a first example being not subject of the present claim 1. A brushless motor 2 supported by a housing 1 is used as the electric motor. A hollow rotation shaft 21 serving as an output shaft of the brushless motor 2 is connected to a planetary gear train 3 so that an output of the brushless motor 2 (a rotation speed) decreases. An output side of the planetary gear train 3 is connected to a screw mechanism 4. A rod 5 meshed with the screw mechanism 4 and connected to rear wheels at opposing ends of the rod 5 is inserted into the hollow rotation shaft 21. The rod 5 is supported by the housing 1 to be non-rotatable and axially movable relative to the housing 1. Accordingly, a rotation driving force output via the planetary gear train 3 when the brushless motor 2 rotates is converted to an axial driving force of the rod 5 via the screw mechanism 4 so as to steer and operate the rear wheels.

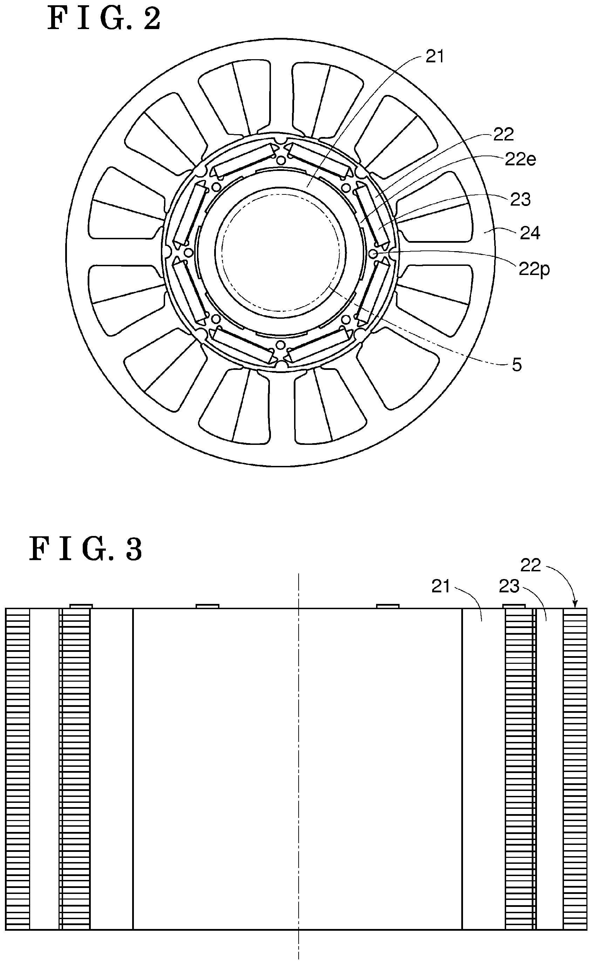

As illustrated in Figs. 1 to 4, the brushless motor 2 includes a stator 24 and a rotor 20 that includes the hollow rotation shaft 21 supported by the housing 1 to be rotatable thereto, a cylindrically formed back yoke 22 fitted to an outer peripheral surface of the hollow rotation shaft 21 and integrally rotating with the hollow rotation shaft 21, and plural permanent magnets 23 arranged at the back yoke 22 at even intervals in a circumferential direction thereof. The rod 5 is inserted into the hollow rotation shaft 21 as illustrated by a chain double-dashed line in Figs. 1 and 2 to be brought to a state illustrated in Fig. 5. A magnetic pole center PC is generated as illustrated in Fig. 1.

As illustrated in Figs. 1 and 2, plural projecting portions 22e are formed at the back yoke 22, each of the projecting portions 22e projecting towards an axial center of the hollow rotation shaft 21 from an inner peripheral surface of the back yoke 22 positioned at a substantially circumferential center portion of each of the permanent magnets 23. The projecting portions 22e extend in the axial direction of the hollow rotation shaft 21. The back yoke 22 is press-fitted to the outer peripheral surface of the hollow rotation shaft 21 via the projecting portions 22e. A magnetic path is formed from the back yoke 22 to the hollow rotation shaft 21 via each of the projecting portions 22e accordingly.

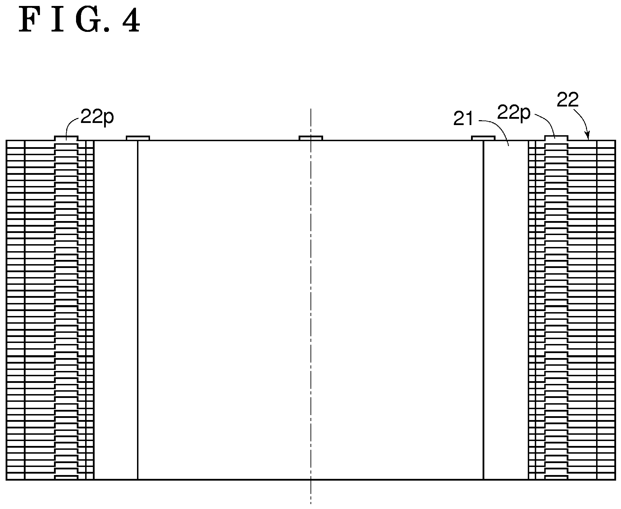

According to the present example being not subject of the present claim 1, the permanent magnets 23 are accommodated within the back yoke 22 as illustrated in Figs. 1 to 3. Alternatively, the permanent magnets 23 may be fixed to an outer peripheral surface of the back yoke 22. As illustrated in Fig. 4, the back yoke 22 is formed by a lamination of plural annular plates made of nonmagnetic material. Concavo-convex portions 22p of the annular plates (steel plates) adjacent to one another are fitted so that the annular plates forming the back yoke 22 are joined to one another. In Figs. 3 and 4, application of hatching for the permanent magnets 23 is omitted for visibility.

In a case where the back yoke 22 is press-fitted to the hollow rotation shaft 21, respective inner peripheral surfaces of the plural projecting portions 22e make contact with the outer peripheral surface of the hollow rotation shaft 21. As compared to a case where the entire inner peripheral surface of the back yoke 22 makes contact with the outer peripheral surface of the hollow rotation shaft 21, a contact area between the back yoke 22 and the hollow rotation shaft 21 may be reduced. A deformation of the hollow rotation shaft 21 or the back yoke 22 caused by the press-fitting load may be inhibited accordingly. In addition, because the projecting portions 22e extend in the axial direction, the press-fitting of the back yoke 22 to the hollow rotation shaft 21 is easily performed so that the back yoke 22 may be held in a stable state.

Further, because each of the projecting portions 22e projects towards the axial center of the hollow rotation shaft 21 from the inner peripheral surface of the back yoke 22 positioned at the circumferential center of each of the permanent magnets 23. Therefore, the magnetic path is formed from the back yoke 22 to the hollow rotation shaft 21 via each of the projecting portions 22e. A flux leakage is restrained to securely form the magnetic path passing through the hollow rotation shaft 21. Consequently, the performance of the brushless motor 2 may be improved.

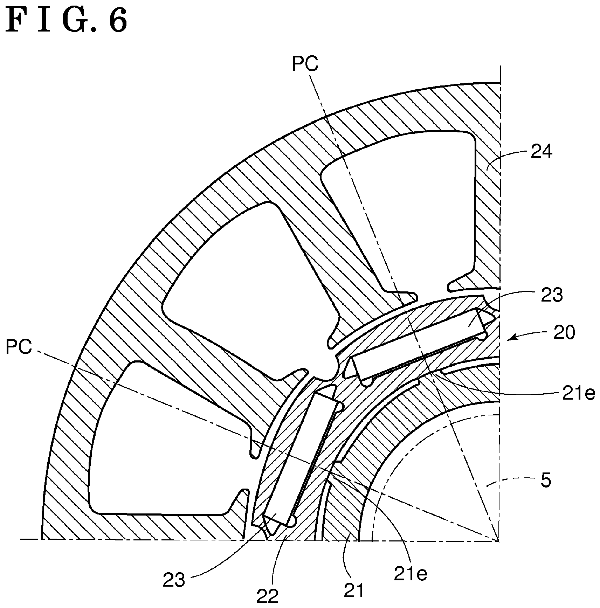

Fig. 6 illustrates a portion of members constituting the electric motor according to a modified example of the first example being not subject of the present claim 1. In Fig. 6, the substantially same members as those illustrated in Fig. 1 bear the same reference numerals. According to the modified example of the first example being not subject of the present claim 1 as illustrated in Fig. 6, plural projecting portions 21e are formed at the hollow rotation shaft 21. Specifically, each of the projecting portions 21e projects from the axial center of the hollow rotation shaft 21 towards the inner peripheral surface of the back yoke 22 positioned at the circumferential center portion of each of the permanent magnets 23. In addition, the projecting portions 21e extend in the axial direction of the hollow rotation shaft 21. The hollow rotation shaft 21 is press-fitted to the inner peripheral surface of the back yoke 22 via the projecting portions 21e. The magnetic path is formed from the back yoke 22 to the hollow rotation shaft 21 via each of the projecting portions 21e.

According to the modified example of the first example being not subject of the present claim 1, a deformation of the hollow rotation shaft 21 or the back yoke 22 caused by the press-fitting load may be inhibited. In addition, because the projecting portions 21e extend in the axial direction, the press-fitting of the hollow rotation shaft 21 to the back yoke 22 is easily performed so that the back yoke 22 may be held in a stable state. Further, because each of the projecting portions 21e projects from the axial center of the hollow rotation shaft 21 towards the inner peripheral surface of the back yoke 22 positioned at the circumferential center of each of the permanent magnets 23, the magnetic path is formed from the back yoke 22 to the hollow rotation shaft 21 via each of the projecting portions 21e. A flux leakage is restrained to securely form the magnetic path passing through the hollow rotation shaft 21. Consequently, the performance of the brushless motor 2 may be improved.

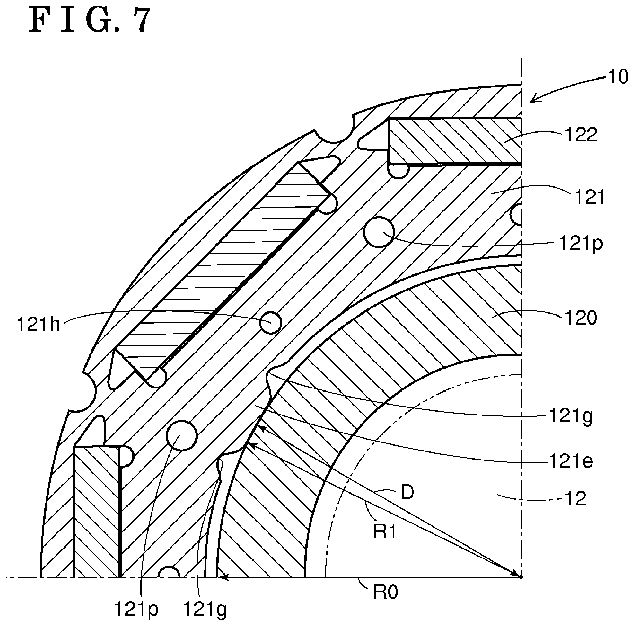

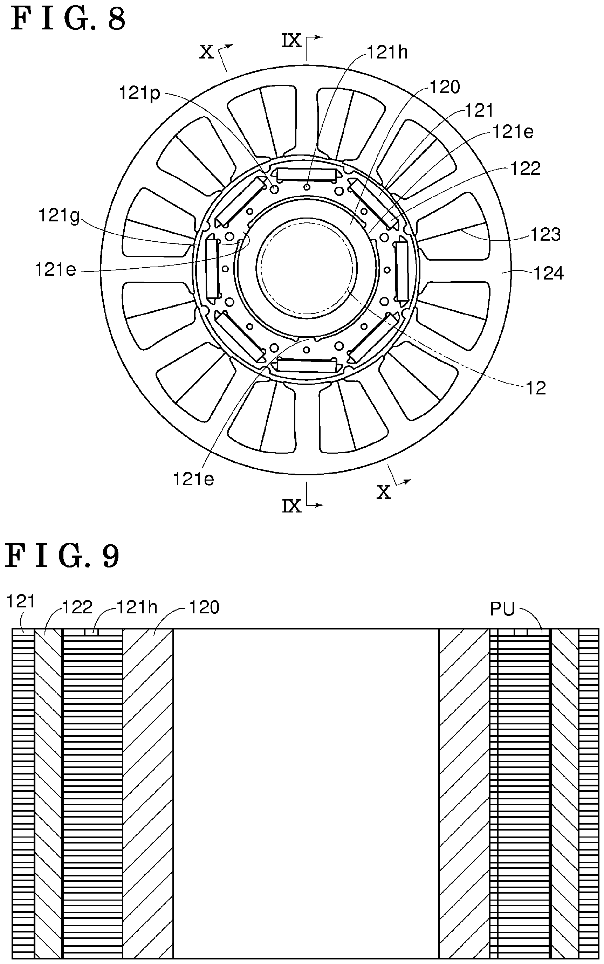

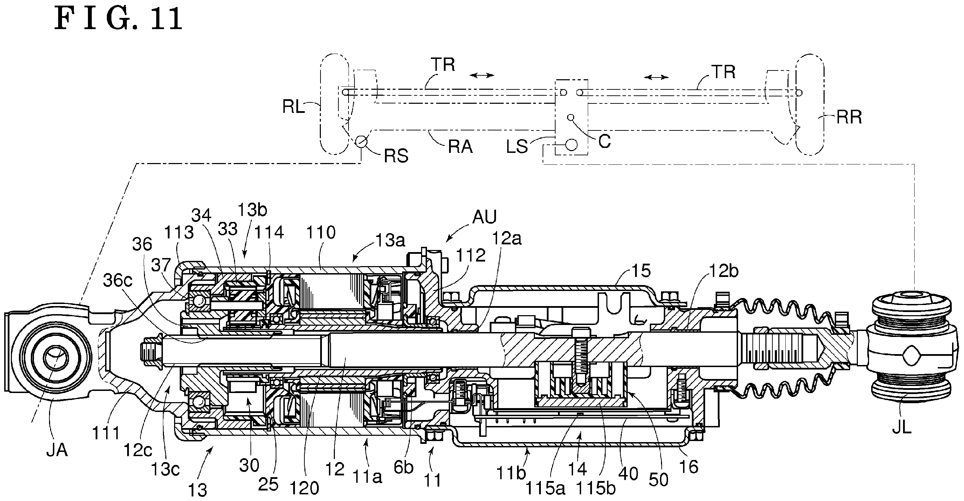

A second embodiment, which is an embodiment of the claimed invention, will be explained with reference to Figs. 7 to 13. First, a rotor of an electric motor according to the second embodiment will be explained with reference to Figs. 7 to 10. A rotor 10, which is used in an electric motor 13a (see Fig. 11), includes a hollow rotation shaft 120 rotatably supported by a housing 11 (see Fig. 11), a cylindrically formed back yoke 121 fitted to an outer peripheral surface of the hollow rotation shaft 120 and integrally rotating with the hollow rotation shaft 120, and plural permanent magnets 122 arranged at the back yoke 121 at even intervals in a circumferential direction of the back yoke 121. A rod 12 is inserted into the hollow rotation shaft 120 as illustrated by a chain double-dashed line in Figs. 7 and 8. The electric motor 13a also includes a stator 124 and a coil 123 as illustrated in Fig. 8.

As illustrated in Figs. 7 and 8, plural projecting portions 121e are formed at the back yoke 121, each of the projecting portions 121e projecting towards an axial center of the hollow rotation shaft 120 while extending in the axial direction of the hollow rotation shaft 120. Each of the projecting portions 121e includes an inner peripheral surface formed in an arc shape in a cross section. The back yoke 121 is press-fitted to the outer peripheral surface of the hollow rotation shaft 120 via the projecting portions 121e. An inner radius of the inner peripheral surface of each of the projecting portions 121e, which is indicated by R1 in Fig. 7, formed in the arc shape in the cross section is specified to be greater than an outer radius of the outer peripheral surface of the hollow rotation shaft 120, which is indicated by R0 in Fig. 7. In addition, a distance between at least a circumferential center of the inner peripheral surface of each of the projecting portions 121e formed in the arc shape in the cross section and the axial center of the hollow rotation shaft 120, which is indicated by D in Fig. 7, is specified to be equal to the outer radius (R0) of the outer peripheral surface of the hollow rotation shaft 120. According to the present embodiment, three of the projecting portions 121e are formed at the back yoke 121 at even intervals in the circumferential direction thereof.

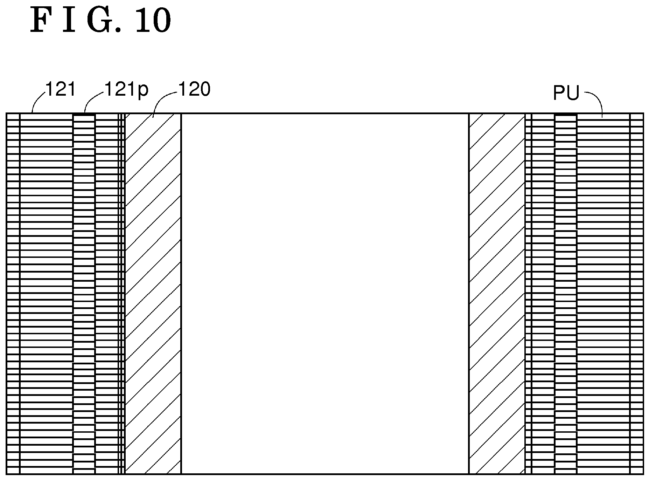

According to the present embodiment, the plural permanent magnets 122 are accommodated within the back yoke 121 as illustrated in Figs. 7 to 9. Alternatively, the permanent magnets 122 may be fixed to an outer peripheral surface of the back yoke 121. As illustrated in Fig. 10, the back yoke 121 is formed by a lamination of plural steel plates, i.e., plural annular plates made of nonmagnetic material. Plural joint portions 121p, each in a circular concavo-convex form, are formed at each of the steel plates so that the joint portions 121p of the adjacent steel plates are fitted to one another thereby obtain a lamination steel as a unit. In Figs. 9 and 10, application of hatching for the back yoke 121 is omitted for visibility.

As mentioned above, the inner radius (R1) of each of the projecting portions 121e is specified to be greater than the outer radius (R0) of the hollow rotation shaft 120 and the distance (D) between at least the circumferential center of the inner peripheral surface of each of the projecting portions 121e and the axial center of the hollow rotation shaft 120 is specified to be equal to the outer radius (R0) of the outer peripheral surface of the hollow rotation shaft 120. Therefore, in a case where the back yoke 121 is press-fitted to the hollow rotation shaft 120, the circumferential center of the inner peripheral surface of each of the projecting portions 121e makes contact with the outer peripheral surface of the hollow rotation shaft 120. As compared to a case where the entire inner peripheral surface of the back yoke 121 makes contact with the outer peripheral surface of the hollow rotation shaft 120, a contact area between the back yoke 121 and the hollow rotation shaft 120 may be reduced. A deformation of the hollow rotation shaft 120 or the back yoke 121 caused by the press-fitting load may be inhibited. The outer peripheral surface of the hollow rotation shaft 120 is inhibited from being damaged by respective circumferential end portions of each of the projecting portions 121e accordingly. Further, because the projecting portions 121e extend in the axial direction, the press-fitting of the back yoke 121 to the hollow rotation shaft 120 is easily performed so that the back yoke 121 may be held in a stable state. Furthermore, grooves 121g, 121g are formed at respective circumferential sides of each of the projecting portions 121e so that the grooves 121g, 121g are parallel to the aforementioned projecting portion 121e. Therefore, even in a case where a large load is applied to the respective circumferential end portions of each of the projecting portions 121e, such load is released and escaped in directions where the grooves 121g, 121g are formed. Before the back yoke 121 is press-fitted to the hollow rotation shaft 120, the inner radius (R1) of the inner peripheral surface of each of the projecting portions 121e of the back yoke 121 is greater than the outer radius (R0) of the outer peripheral surface of the hollow rotation shaft 120 and the distance (D) between the circumferential center of the inner peripheral surface of each of the projecting portions 121e and the axial center of the hollow rotation shaft 120 is specified to be smaller than the outer radius (R0) of the outer peripheral surface of the hollow rotation shaft 120.

One of the steel plates arranged at the uppermost portion in the lamination (i.e., of the lamination steel), i.e., a steel plate PU in Figs. 9 and 10, includes plural identification bores 121h formed to be recessed at even intervals in the circumferential direction as illustrated in Figs. 7 to 9. Accordingly, the determination or identification of upper and lower surfaces of the back yoke 121 formed by the lamination steel is achievable. Not only an improved assembly performance is obtained but also the positioning at a time of magnetization is easily and securely performed. In this case, an additional processing such as an application of paint, for example, is not necessary for the identification of the upper and lower surfaces of the back yoke 121, which inhibits an increase of the number of processes. The plural identification bores 121h may be formed as a part of press working relative to the steel plates. In addition, because each of the identification bores 121h is not a through-hole penetrating through the back yoke 121 in the axial direction (i.e., the entire lamination steel), a magnetic saturation that may be induced by a through-hole is not necessarily considered or worried about. Each of the identification bores 121h may be desirably formed at a substantially intermediate portion between the adjacent joint portions 121p in the circumferential direction. The joint portion 121p formed at the steel plate PU at the uppermost portion of the lamination steel is inhibited from including a protruding portion. Thus, as illustrated in Fig. 10, the joint portion 121p is inhibited from protruding from the surface of the steel plate PU after the steel plates are laminated, and the steel plate PU forms a smooth surface in the same way as the lowermost portion of the lamination steel.

Next, a rear wheel steering apparatus including the rotor that includes the aforementioned configuration will be explained with reference to Figs. 11 to 13. The rear wheel steering apparatus of the present embodiment constitutes a portion of a four-wheel steering system (4WS) for a vehicle, of which a front wheel steering apparatus including a known configuration is omitted in Figs. 11 to 13. In addition, various types of suspension mechanisms are considered for supporting rear wheels of a vehicle. According to the present embodiment, a suspension mechanism is configured as illustrated by a chain double-dashed line in Fig. 11. Specifically, an actuator unit AU constituting the rear wheel steering apparatus of the present embodiment is arranged between a support portion RS relative to a rear axle RA supporting rear wheels RL and RR and a link LS pivotally supported by the rear axle RA to rotate about a center C. Accordingly, a portion between the support portion RS and the link LS is driven to expand and contract, thereby steering the rear wheels RL and RR via tie rods TR and TR in association with the rotation of the link LS.

In the actuator unit AU, the rod 12 is supported by the housing 11 in an axially movable manner, i.e., to perform a linear motion. One end portion of the actuator unit AU is connected to the link LS via a ball joint JL. The housing 11 is connected to the support portion RS via a ball joint JA. An actuator 13 drives the rod 12 so that the portion between the support portion RS of the rear axle RA and the link LS is driven in the expansion and contraction manner. Specifically, the electric motor 13a constituting the actuator 13 is controlled by a controller 14 in a state where a rotation output of the electric motor 13a is reduced or decelerated by a deceleration mechanism 13b and is then converted to the linear motion of the rod 12 via a linear motion mechanism 13c. According to the present embodiment, the electric motor 13a is constituted by a brushless motor.

According to the present embodiment, the housing 11 includes a first housing 11a that basically houses components of the actuator 13, for example, the electric motor 13a, and a second housing 11 b that basically houses components of the controller 14, for example, an electronic circuit board 40. A connection cover 111 is connected to a cylindrical body 110 constituting the first housing 11a while a case 112 constituting the second housing 11b and including opening portions at upper and lower sides in a vertical direction and at both sides in an axial direction of the hollow rotation shaft 120 is connected to the cylindrical body 110. The connection cover 111 serves as a first connection member while the case 112 serves as a second connection member. In addition, the housing 11 is connected to the suspension mechanism via the connection cover 111 and the case 112. First and second cover portions 15 and 16 are connected to the opening portions at the upper and lower sides in the vertical direction of the case 112. The housing 11 of the present embodiment is made of metal while the connection cover 111 and the case 112 are made of aluminum. The cylindrical body 110, the first and second cover portions 15 and 16 are made of iron. The rod 12 is connected to the case 112.

The actuator 13 is press-fitted and fixed within the cylindrical body 110 in a state where the coil 123 is wound on the stator 124. An output shaft of the electric motor 13a is formed by the hollow rotation shaft 120 that is rotatably supported by an inner diameter portion 25a of a motor cover 25 inserted into the cylindrical body 110 and formed in an annular form and by an annular groove 112a formed at the case 112 via bearings 25b and 112b respectively. The aforementioned back yoke 121 is press-fitted and fixed to an axially intermediate portion of the hollow rotation shaft 120. The permanent magnets 122 are arranged at even intervals in the circumferential direction of the back yoke 121.

The rod 12 is coaxially arranged within the hollow rotation shaft 120 so as to be movable relative to the housing 11 in the axial direction, i.e., to perform the linear motion, and to be non-rotatable relative to the housing 11. Bushes 12a and 12b are disposed between the rod 12 and a support portion of the case 112 for reducing a sliding resistance so that the rod 12 smoothly performs the axial movement. That is, according to the present embodiment, the actuator unit AU includes an expansion and contraction mechanism supported at one end. Thus, each of the bushes 12a and 12b does not need to function as a bearing in an axially moving mechanism supported at both ends.

The deceleration mechanism 13b according to the present embodiment is constituted by a planetary gear mechanism 30. The planetary gear mechanism 30 includes a sun gear 31 serving as an external gear, a ring gear 33 serving as an internal gear, and a planetary gear 32 serving as an external gear. The sun gear 31 is integrally connected to the hollow rotation shaft 120 to be rotatable thereto. The ring gear 33 is fixed to a holder 34 serving as a cylindrical holding member. The planetary gear 32 is meshed with the sun gear 31 and the ring gear 33 to rotate around the sun gear 31. A nut member 36 serving as a carrier for rotatably supporting the planetary gear 32 via a pin 35 is rotatably supported by the holder 34 via a bearing 37. The bearing 37 serves as a ball bearing including an inner ring 37a fitted to the nut member 36 and an outer ring 37b is fitted to the holder 34. The bearing 37 is held by the nut member 36 by means of a spacer 37c in a C-shape.

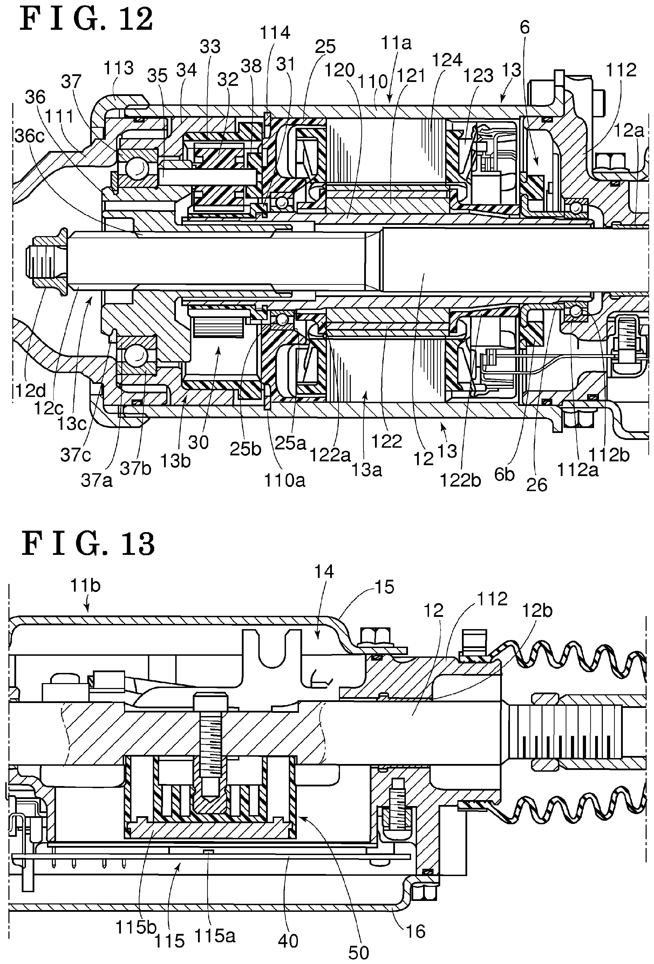

According to the present embodiment, the holder 34 and the pin 35 are made of metal, for example, made of iron. The sun gear 31, the planetary gear 32, and the ring gear 33 are made of synthetic resin. The sun gear 31 is integrally formed at the hollow rotation shaft 120 made of metal. The ring gear 33 is supported by the holder 34 to be non-rotatable thereto. The holder 34 is supported by the cylindrical body 110 to be non-rotatable thereto. As illustrated in Fig. 12, a snap ring 114 is held at an annular groove 110a formed within the cylindrical body 110. An annular-formed lock nut 113 is meshed with a screw portion of the cylindrical body 110 at one side where the deceleration mechanism 13b is formed (i.e., a left side in Fig. 12) in a state where the outer ring 37b of the bearing 37 and the holder 34 are disposed between an annular side surface of the snap ring 114 and an annular opening end surface of the connection cover 111. Then, the cylindrical body 110 and the connection cover 111 are tightened to each other. The outer ring 37b of the bearing 37 and the holder 34 are strongly disposed and sandwiched between the snap ring 114 and the connection cover 111 by a pressing force in the axial direction that is generated by the meshing of the lock nut 113 with the cylindrical body 110. Consequently, the holder 34 is held by the cylindrical body 110 to be non-rotatable thereto.

The nut member 36 and the rod 12 are arranged in a state where an external thread portion 12c formed by a trapezoidal screw at an outer peripheral surface of one end portion of the rod 12 over a predetermined axial length is meshed with an internal thread portion 36c formed at an inner peripheral surface of the nut member 36. The nut member 36 and the rod 12 constitute the linear motion mechanism 13c. In order to inhibit the rod 12 from being dislocated, a nut 12d is meshed with an end of the external thread portion 12c. Because the rod 12 is supported in the aforementioned manner, an axial load that may be applied to the rod 12 is absorbed by the cylindrical body 110 and the connection cover 111 via the nut member 36, the bearing 37, the holder 34, and the snap ring 114.

As illustrated in Fig. 13, as the controller 14, the electronic circuit board 40 constituting an electronic control unit and a magnet block 50 constituting a displacement detection device 115 are accommodated within the second housing 11b. The displacement detection device 115 includes a displacement sensor 115a constituted by a magnetic vector sensor, for example, and a permanent magnet 115b constituted by a neodymium magnet, for example. The displacement sensor 115a is supported by the electronic circuit board 40 while the permanent magnet 115b is held within the magnet block 50. The magnet block 50 includes a function for detecting an axial displacement of the rod 12 when the rod 12 performs the linear motion and a function for inhibiting the rotation of the rod 12.

According to the actuator 13 of the present embodiment, in a case where the hollow rotation shaft 120 is driven to rotate by the electric motor 13a, the rotation output of the electric motor 13a is reduced and decelerated by the deceleration mechanism 13b of the planetary gear mechanism 30 to thereby drive the nut member 36 to rotate. That is, the nut member 36 is connected to the deceleration mechanism 13b to rotate. The rod 12 is meshed with the deceleration mechanism 13b. Then, the rotary motion of the nut member 36 is converted to the linear motion of the rod 12 by the linear motion mechanism 13c. As a result, the portion between the support portion RS of the rear axle RA and the link LS is driven in the expansion and contraction manner to adjust a steering angle of the rear wheels.

A portion of a manufacturing method of the actuator unit AU including the aforementioned configuration will be explained. First, the stator 124 on which the coil 123 is wound is press-fitted within the cylindrical body 110 by a press-fitting device and is then fixed to a predetermined position as illustrated in Fig. 12. The motor cover 25 is inserted into the cylindrical body 110 and the snap ring 114 is fixed to the annular groove 110a within the cylindrical body 110. Aside from the aforementioned process, the bearing 25b is press-fitted to the hollow rotation shaft 120 at which the sun gear 31 is integrally formed, and thereafter a first pressing member 122a made of resin for holding the permanent magnets 122 and the back yoke 121 are press-fitted to the hollow rotation shaft 120. The permanent magnets 122 are then accommodated within the back yoke 121, and magnetized in a sub-assembly state where a second pressing member 122b is press-fitted to the hollow rotation shaft 120.

Next, the aforementioned hollow rotation shaft 120 is inserted into a hollow portion of the stator 124 so that the bearing 25b is held in a state to be fitted to a hollow portion of the motor cover 25. Further, a support member 26 to which a plastic magnet 6b for a magnetic pole sensor 6 is fixedly attached is press-fitted to an end portion of the hollow rotation shaft 120. After the plastic magnet 6b is magnetized, the case 112 is connected to an opening portion of the cylindrical body 110 facing the electric motor 13a (i.e., at a right side in Fig. 12) so that the case 112 and the cylindrical body 110 are connected to each other by a bolt. An outer ring of the bearing 112b is fitted to the annular groove 112a of the case 112. When the case 112 is connected to the cylindrical body 110, an inner ring of the bearing 112b is fitted to the hollow rotation shaft 120.

In addition, the inner ring 37a of the bearing 37 is fitted to the nut member 36 to be held by the spacer 37c while the outer ring 37b of the bearing 37 is fitted to the holder 34. Then, the ring gear 33 is attached to the holder 34 and the planetary gear 32 is supported by the nut member 36 by the pin 35. An engagement member 38 is then engaged with the pin 35. The external thread portion 12c of the rod 12 is meshed with the internal thread portion 36c of the nut member 36, and the nut 12d is meshed with the end portion of the external thread portion 12c to thereby obtain a sub-assembly.

In a case where the back yoke 121 is press-fitted and fixed to the hollow rotation shaft 120 at which the sun gear 31 is integrally formed, the plural identification bores 121h are formed at the uppermost steel plate of the lamination steel as illustrated in Fig. 8. Thus, the upper and lower surfaces of the back yoke 121 may be determined and identified to thereby easily confirm the press-fitting direction of the back yoke 121 to the hollow rotation shaft 120. In addition, in a case where the permanent magnets 122 accommodated within the back yoke 121 are magnetized, the positioning for magnetization is achievable by the plural identification bores 121h serving as a mark, which may lead to an easy and secure magnetizing operation.

## Claims

1. A rear wheel steering apparatus (AU) for a vehicle mounted to a suspension mechanism to steer rear wheels (RL, RR), the rear wheel steering apparatus (AU) comprising:
a housing (11) connected via a first connection member (111) and a second connection member (112) to the suspension mechanism that supports the rear wheels (RL, RR) of a vehicle;
an electric motor (13a) accommodated within a cylindrical body (110) that constitute a portion of the housing (11);
a deceleration mechanism (13b) accommodated within the cylindrical body (110) to decrease an output of the electric motor (13a);
a linear motion mechanism (13c) including a nut member (36) connected to the deceleration mechanism (13b) to rotate and a rod (12) meshed with the deceleration mechanism (13b) and connected to the second connection member (112), the linear motion mechanism (13c) converting a rotary motion of the nut member (36) to a linear motion of the rod (12);
a connection cover (111) including the first connection member (111) and closing an opening portion of the cylindrical body (110) at a side facing the deceleration mechanism (13b); and
a rotor (10) constituting a portion of the electric motor (13a) and including a hollow rotation shaft (120) supported by the cylindrical body (110) to be rotatable relative to the cylindrical body (110),
**characterized in that**
the rotor (10) constituting a back yoke (121) fitted to an outer peripheral surface of the hollow rotation shaft (120) and integrally rotating with the hollow rotation shaft (120), the back yoke (121) including a cylindrical form, and a plurality of permanent magnets (122) arranged at the back yoke (121) at even intervals in a circumferential direction of the back yoke (121);
the back yoke (121) including a plurality of projecting portions (121e) each of which includes an inner peripheral surface formed in an arc shape in a cross section, the inner peripheral surface projecting towards an axial center of the hollow rotation shaft (120) and extending in an axial direction of the hollow rotation shaft (120), an inner radius (R1) of the inner peripheral surface formed in the arc shape in the cross section being specified to be greater than an outer radius (R0) of the outer peripheral surface of the hollow rotation shaft (120) and a distance (D) between a circumferential center of the inner peripheral surface formed in the arc shape in the cross section and the axial center of the hollow rotation shaft (120) being specified to be equal to the outer radius (R0) of the outer peripheral surface of the hollow rotation shaft (120), the back yoke (121) being press-fitted to the outer peripheral surface of the hollow rotation shaft (120) via the plurality of projecting portions (121e).

2. The rear wheel steering apparatus (AU) according to claim 1, further comprising grooves (121g) at respective circumferential sides of each of the plurality of projecting portions (121e), the grooves (121g) being parallel to the each of the plurality of projecting portions (121e).

3. The rear wheel steering apparatus (AU) according to either claim 1 or 2, wherein the plurality of projecting portions (121e) includes three projecting portions (121e) arranged at even intervals in a circumferential direction of the back yoke (121).

4. The rear wheel steering apparatus (AU) according to any one of claims 1 to 3, wherein the back yoke (121) is formed by a lamination of a plurality of steel plates, one of the plurality of steel plates (PU) arranged at an uppermost portion in the lamination includes a plurality of identification bores (121h) formed to be recessed at even intervals in the circumferential direction of the back yoke (121).

## Patentansprüche

1. Hinterradlenkvorrichtung (AU) für ein Fahrzeug, die an einem Aufhängungsmechanismus zum Lenken von Hinterrädern (RL, RR) montiert ist, wobei die Hinterradlenkvorrichtung (AU) folgendes aufweist:
ein Gehäuse (11), das über ein erstes Verbindungselement (111) und ein zweites Verbindungselement (112) mit dem Aufhängungsmechanismus verbunden ist, der die Hinterräder (RL, RR) von einem Fahrzeug trägt;
einen Elektromotor (13a), der in einem zylindrischen Körper (110) untergebracht ist, der ein Teil des Gehäuses (11) bildet;
einen Verzögerungsmechanismus (13b), der in dem zylindrischen Körper (110) untergebracht ist, um eine Ausgab des Elektromotors (13a) zu verringern;
einen lineraren Bewegungsmechanismus (13c) mit einem Nutelement (36), das mit dem Verzögerungsmechanismus (13b) verbunden ist, um sich zu drehen, und eine Stange (12), die mit dem Verzögerungsmechanismus (13b) in Eingriff steht und mit dem zweiten Verbindungsmechanismus (112) verbunden ist, wobei der lineare Bewegungsmechanismus (13c) eine Drehbewegung des Nutelements (36) in eine lineare Bewegung der Stange (12) umwandelt;
eine Verbindungsabdeckung (111) mit dem ersten Verbindungselement (111) und die einen Öffnungsabschnitt des zylindrischen Körpers (110) an einer Seite verschließt, die dem Verzögerungsmechanismus (13b) zugewandt ist; und
einen Rotor (10), der einen Teil des Elektromotors (13a) bildet und und eine hohle Rotationswelle (120) hat, die von dem zylindrischen Körper (110) getragen wird, um relativ zu dem zylindrischen Körper (110) drehbar zu sein,
**dadurch gekennzeichnet, dass**
der Rotor (10) ein hinteres Joch (121) bildet, das an einer äußeren Umfangsfläche der hohlen Rotationswelle (120) angebracht ist und sich einstückig mit der hohlen Rotationswelle (120) dreht, wobei das hintere Joch (121) eine zylindrische Form und eine Vielzahl von Permanentmagneten (122) hat, die an dem hinteren Joch (121) in regelmäßigen Abständen in einer Umfangsrichtung des hinteren Jochs (121) angeordnet sind;
das hintere Joch (121) eine Vielzahl von vorstehenden Abschnitten (121e) hat, von welchen jeder eine innere Umfangsfläche hat, die in einem Querschnitt bogenförmig ausgebildet ist, wobei die innere Umfangsfläche in Richtung hin zu einem axialen Zentrum der hohlen Rotationswelle (120) vorsteht und sich in einer axialen Richtung der hohlen Rotationswelle (120) erstreckt, wobei ein Innenraduis (R1) der inneren Umfangsoberfläche, der im Querschnitt bogenförmig ausgebildet ist, so spezfiziert ist, um größer zu sein als ein Außenradius (R0) der äußeren Umfangsfläche der hohlen Rotationswelle (120), und ein Abstand (D) zwischen einem Umfangszentrum der inneren Umfangsfläche, die im Querschnitt bogenförmig ausgebildet ist, und dem axialen Zentrum der hohlen Rotationswelle (120) so spezifiziert ist, um gleich dem Außenradius (R0) der äußeren Umfangsfläche der hohlen Rotationswelle (120) zu sein, wobei das hintere Joch (121) mit der äußeren Umfangsfläche der hohlen Rotationswelle (120) über die Vielzahl von vorstehenden Abschnitten (121e) pressgepasst ist.

2. Hinterradlenkvorrichtung (AU) gemäß Anspruch 1, ferner mit Rillen (121g) an jeweiligen Umfangsseiten von jeder der Vielzahl von vorstehenden Abschnitten (121e), wobei die Rillen (121g) parallel zu jeder der Vielzahl von vorstehenden Abschnitten (121e) sind.

3. Hinterradlenkvorrichtung (AU) gemäß einem der Ansprüche 1 oder 2, wobei die Vielzahl von vorstehenden Abschnitten (121e) drei vorstehende Abschnitte (121e) hat, die in regelmäßigen Abständen in einer Umfangsrichtung des hinteren Jochs (121) angeordnet sind.

4. Hinterradlenkvorrichtung (AU) gemäß einem der Ansprüche 1 bis 3,wobei das hintere Joch (121) durch Laminieren einer Vielzahl von Stahlplatten (PU) ausgebildet ist, wobei eine der Vielzahl von Stahlplatten (PU), die an dem obersten Abschnitt in der Laminierung angeordnet ist, eine Vielzahl von Indentifikationsbohrungen (121h) hat, die so ausgebildet sind, um in regelmäßigen Abständen in Umfangsrichtung des hinteren Jochs (121) eingepresst zu sein.

## Revendications

1. Appareil de direction de roues arrière (AU) pour un véhicule monté sur un mécanisme de suspension afin de diriger les roues arrière (RL, RR), l'appareil de direction de roues arrière (AU) comprenant :
un boîtier (11) raccordé, via un premier élément de raccordement (111) et un second élément de raccordement (112), au mécanisme de suspension qui supporte les roues arrière (RL, RR) d'un véhicule ;
un moteur électrique (13a) logé à l'intérieur d'un corps cylindrique (110) qui constitue une partie du boîtier (11) ;
un mécanisme de décélération (13b) logé dans le corps cylindrique (110) pour diminuer une sortie du moteur électrique (13a) ;
un mécanisme de mouvement linéaire (13c) comprenant un élément d'écrou (36) raccordé au mécanisme de décélération (13b) pour tourner et une tige (12) engrenée avec le mécanisme de décélération (13b) et raccordée au second élément de raccordement (112), le mécanisme de mouvement linéaire (13c) convertissant un mouvement rotatif de l'élément d'écrou (36) en un mouvement linéaire de la tige (12) ;
un couvercle de raccordement (111) comprenant le premier élément de raccordement (111) et fermant une partie d'ouverture du corps cylindrique (110) au niveau d'un côté faisant face au mécanisme de décélération (13b) ; et
un rotor (10) constituant une partie du moteur électrique (13a) et comprenant un arbre de rotation creux (120) supporté par le corps cylindrique (110) pour pouvoir tourner par rapport au corps cylindrique (110),
**caractérisé en ce que** :
le rotor (10) constituant une culasse arrière (121) montée sur une surface périphérique externe de l'arbre de rotation creux (120) et tournant, de manière solidaire, avec l'arbre de rotation creux (120), la culasse arrière (121) comprenant une forme cylindrique, et une pluralité d'aimants permanents (122) agencés au niveau de la culasse arrière (121) à intervalles réguliers dans une direction circonférentielle de la culasse arrière (121) ;
la culasse arrière (121) comprenant une pluralité de parties en saillie (121e) dont chacune comprend une surface périphérique interne formée selon une forme d'arc dans une section transversale, la surface périphérique interne faisant saillie vers un centre axial de l'arbre de rotation creux (120) et s'étendant dans une direction axiale de l'arbre de rotation creux (120), un rayon interne (R1) de la surface périphérique interne formée en forme d'arc dans la section transversale étant spécifié pour être supérieur à un rayon externe (R0) de la surface périphérique externe de l'arbre de rotation creux (120) et une distance (D) entre un centre circonférentiel de la surface périphérique interne formée en forme d'arc dans la section transversale et le centre axial de l'arbre de rotation creux (120) étant spécifié pour être égal au rayon externe (R0) de la surface périphérique externe de l'arbre de rotation creux (120), la culasse arrière (121) étant montée à la presse sur la surface périphérique externe de l'arbre de rotation creux (120) via la pluralité de parties en saillie (121e).

2. Appareil de direction de roues arrière (AU) selon la revendication 1, comprenant en outre des rainures (121g) au niveau des côtés circonférentiels respectifs de chacune de la pluralité de parties en saillie (121e), les rainures (121g) étant parallèles à chacune de la pluralité de parties en saillie (121e).

3. Appareil de direction de roues arrière (AU) selon la revendication 1 ou 2, dans lequel la pluralité de parties en saillie (121e) comprend trois parties en saillie (121e) agencées à intervalles réguliers dans une direction circonférentielle de la culasse arrière (121).

4. Appareil de direction de roues arrière (AU) selon l'une quelconque des revendications 1 à 3, dans lequel la culasse arrière (121) est formée par une stratification d'une pluralité de plaques en acier, l'une de la pluralité de plaques en acier (PU) agencée au niveau de la partie la plus haute de la stratification comprend une pluralité d'alésages d'identification (121h) formés pour être enfoncés à intervalles réguliers dans la direction circonférentielle de la culasse arrière (121).
